# EUROPÄISCHE PATENTSCHRIFT

(11) **EP 3 083 275 B1**
(45) Veröffentlichungstag und Bekanntmachung des Hinweises auf die Patenterteilung: **10.07.2019**
(21) Anmeldenummer: 14815661.5
(22) Anmeldetag: 16.12.2014
(51) Int. Cl.: B60C 1/00, C01B 33/18, C01B 33/193, C08K 3/36, C09C 1/30, C08K 9/06

(54) **SILANMODIFIZIERTE KIESELSÄURE, VERFAHREN ZU DEREN HERSTELLUNG UND DEREN VERWENDUNG**
SILANE-MODIFIED SILICIC ACID, METHOD FOR THE PRODUCTION AND USE THEREOF
ACIDE SILICIQUE MODIFIÉ PAR UN SILANE, SON PROCÉDÉ DE FABRICATION ET SON UTILISATION

(30) Priorität: 17.12.2013 DE 102013226162
(43) Veröffentlichungstag der Anmeldung: 26.10.2016
(73) Patentinhaber: Evonik Degussa GmbH, 45128 Essen (DE)
(72) Erfinder: BLUME, Anke, 53919 Weilerswist (DE); PETERLE, Torsten, 79369 Grenzach-Wyhlen (DE); MONKIEWICZ, Jaroslaw, 79618 Rheinfelden (DE)
(74) Vertreter: Evonik Patent Association
(86) Internationale Anmeldenummer: PCT/EP2014/077859
(87) Internationale Veröffentlichungsnummer: WO 2015/091412

(56) Entgegenhaltungen:
- EP-A2- 1 590 297
- DE-A1- 10 358 466
- US-B1- 6 268 424
- W.K. WONG ET AL: "Filler-filler interaction and filler-polymer interaction in carbon black and silica filled ExxproTM polymer", MACROMOLECULAR SYMPOSIA, Bd. 194, Nr. 1, 1. April 2003 (2003-04-01) , Seiten 175-184, XP055171628, ISSN: 1022-1360, DOI: 10.1002/masy.200390080
- WOLFF S: "CHEMICAL ASPECTS OF RUBBER REINFORCEMENT BY FILTERS", RUBBER CHEMICAL TECHNOLOGY, XX, XX, Bd. 69, 1. Januar 1996 (1996-01-01), Seiten 325-346, XP009058797,
- GOERL L ET AL: "SILANISIERTE KIESELSAEUREN - EINE NEUE PRODUKTKLASSE FUER ZEITGEMAESSE MISCHUNGSENTWICKLUNG", KAUTSCHUK UND GUMMI - KUNSTSTOFFE, HUTHIG VERLAG, HEIDELBERG, DE, Bd. 46, Nr. 7, 1. Juli 1993 (1993-07-01), Seiten 538-544, XP000384142, ISSN: 0948-3276
- WOLFF S.: "OPTIMIZATION OF SILANE-SILICA OTR COMPOUNDS. PART 1: VARIATIONS OF MIXING TEMPERATURE AND TIME DURING THE MODIFICATION OF SILICA WITH BIS-(3-TRIETHOXYSILYLPROPYL)-TETRASULFIDE" , RUBBER CHEMISTRY AND TECHNOLOGY, Bd. 55, Nr. 4, 1982, Seiten 967-989, XP8175116, DOI: 10.5254/1.3535926
- SAE-OUI P ET AL: "Roles of silane coupling agents on properties of silica-filled polychloroprene", EUROPEAN POLYMER JOURNAL, PERGAMON PRESS LTD. OXFORD, GB, Bd. 42, Nr. 3, 1. März 2006 (2006-03-01), Seiten 479-486, XP028029977, ISSN: 0014-3057, DOI: 10.1016/J.EURPOLYMJ.2005.09.003 [gefunden am 2006-03-01]

## Beschreibung

Die Erfindung betrifft eine silanmodifizierte Kieselsäure, ein Verfahren zu deren Herstellung sowie deren Verwendung.

Es ist bekannt, oxidische oder silikatische Verbindungen mit Organosiliciumverbindungen zu behandeln, um durch diese Behandlung den Verbund zwischen anorganischem Füllstoff und dem verwendeten organischen Polymer in füllstoffverstärkten Elastomeren zu stärken und damit die Eigenschaften der Füllstoffe in den Polymeren zu verbessern.

Aus DE 2141159, DE 2212239 und US 3,978,103 ist bekannt, daß schwefelhaltige Organosiliciumverbindungen, wie Bis-(3-Triethoxysilylpropyl)tetrasulfan oder 3-Mercaptopropyltriethoxysilan als Silanhaftvermittler oder Verstärkungsadditiv in oxidisch gefüllten Kautschukmischungen, unter anderem für Laufflächen und andere Teile von Autoreifen, eingesetzt werden.

Um die erheblichen Probleme bei der Verarbeitung, wie zum Beispiel Pre-Scorch, Scorch und Plastizitätsverhalten, von Mercaptosilanen zu umgehen, ist es bekannt, als Kopplungsagenz für Reifenteile meist polysulfidische Organosilane, wie beispielsweise das Bis-(3-triethoxysilylpropyl)tetrasulfan oder das Bis-(3-triethoxysilylpropyl)disulfan (DE 2542534, DE2405758, DE19541404, DE19734295), die für kieselsäuregefüllte Vulkanisate einen Kompromiss in Bezug auf Vulkanisationssicherheit, einfache Herstellung und Verstärkungsleistung darstellen, zu verwenden.

Die bekannte Einbringung der entsprechenden Additive, speziell der Organosilane und der unmodifizierten Füllstoffe in die unvulkanisierten Polymermischungen kann auf unterschiedlichen Wegen erfolgen.

Das in-situ Verfahren beinhaltet einen gemeinsamen Mischvorgang von Füllstoffen, wie Ruß und Kieselsäure, mit Organosilanen und den verwendeten Polymeren.

Das ex-situ Verfahren beinhaltet eine Modifikation des Füllstoffs mit dem entsprechenden Organosilan oder einer Mischung von verschiedenen Organosilanen, bevor der Füllstoff mit dem Polymer zur Gummirohmischung verarbeitet wird.

Bekannt ist weiterhin die Flüssigdosierung von Organosilanen (US 3,997,356) bei der Rohmischungsherstellung für Gummimischungen oder auch die Dosierung des aktiven Füllstoffs über eine vorgebildete physikalische Mischung aus Organosilan und Füllstoff (DE 3314742, US 4,076,550). Nachteil dieser thermisch nicht vorbehandelten Abmischungen ist die mangelnde Lagerstabilität und damit die häufig nicht gegebene Eigenschaftsstabilität der Produkte.

Die US-PS 4,151,154 beschreibt oxidische silikatische Füllstoffe, deren Oberfläche einer Behandlung mit zwei unterschiedlichen Typen von Organosiliciumverbindungen ausgesetzt wird. Die oxidischen Teilchen werden dabei so behandelt, daß sie eine größere Affinität zu Wasser zeigen und sich auch leichter in wässrigen Systemen verteilen lassen.

Aus der US 3,567,680 ist die Modifizierung von in Wasser suspendiertem Kaolin mit verschiedenen Organosilanen bekannt. Die beschriebenen Organosiliciumverbindungen sind jedoch in den für die Modifizierung nötigen Mengen wasserlöslich, so daß in diesem Fall die Behandlung des Füllstoffes aus einer wässrigen Lösung heraus erfolgen kann.

Die US 4,044,037 beschreibt Arylpolysulfide und mit diesen Verbindungen behandelte mineralische Füllstoffe, die in Kautschukmischungen eingesetzt werden. Die Herstellung erfolgt in einer wässrig/alkoholischen Formulierung, die 80 bis 99,9 Gew.-% Alkohol enthält.

Ferner ist aus EP-PS 01 26 871 ein Verfahren bekannt, bei dem man die Oberfläche silikatischer Füllstoffe mit Hilfe einer wässrigen Emulsion von wasserunlöslichen Organosiliziumverbindungen modifiziert.

Es ist bekannt, dass durch Auflösen der Organosiliciumverbindung in einem organischen Lösungsmittel und anschließender Behandlung von Füllstoffen, z.B. Clays, deren Füllstoffoberfläche modifiziert werden kann (US 3,227,675).

Aus EP 1590297 und EP 1585704 sind Fällungskieselsäuren mit niedriger Oberfläche bekannt.

Aus DE 10122269.6 ist ein Verfahren zur Umsetzung von mindestens einem biopolymeren, biooligomeren, oxidischen oder silikatischen Füllstoff in einem verdichteten Gas mit mindestens einem Silan bekannt.

Aus DE 103 58 466 sind Kieselsäuren bekannt, die mit Silanen modifiziert sein können.

Die bekannten, mit Organosilanen ex-situ modifizierten Füllstoffe haben den Nachteil, dass die Dispersionen dieser ex-situ modifizierten Füllstoffe sehr schlecht sind, was zu erhöhten Mooney-Viskositäten und einem schlechtem Abriebswiderstand führt.

Aufgabe der vorliegenden Erfindung ist es, eine silanmodifizierte Kieselsäure zur Verfügung zu stellen, die sich ausgezeichnet dispergieren lässt und dadurch verbesserte gummitechnische Eigenschaften, zum Beispiel Abrieb, Vulkanisationsverhalten und Mooney Viskosität aufweist.

Gegenstand der Erfindung ist eine silanmodifizierte Kieselsäure, welche dadurch gekennzeichnet ist, dass die BET-Oberfläche 40 bis 155 m²/g, der Schwefelgehalt zwischen 0,05 und 25 Gew.-% und die Partikelgröße d5 ≥ 4 µm und d50 ≥ 16 µm ist und die silanmodifizierte Kieselsäure SCN-Gruppen enthält.

Die silanmodifizierte Kieselsäure kann ein d_{median} von > 20,0µm, bevorzugt > 20,3µm, besonders bevorzugt > 20,6µm, haben.

Die erfindungsgemäße silanmodifizierte Kieselsäure kann einen Gehalt an Kohlenstoff in reiner oder chemisch gebundener Form zwischen 0,1 und 25 Gew.-%, bevorzugt zwischen 0,1 und 10 Gew.-%, besonders bevorzugt zwischen 0,1 und 5 Gew.-%, aufweisen.

Die erfindungsgemäße silanmodifizierte Kieselsäure kann einen Gehalt an physikalisch und chemisch gebundenem Alkohol zwischen 0 und 25 Gew.-%, bevorzugt zwischen 0 und 15 Gew.-%, besonders bevorzugt zwischen 0,1 und 10 Gew.-%, aufweisen.

Die erfindungsgemäße silanmodifizierte Kieselsäure kann einen chemisch oder physikalisch gebundenen Restgehalt des vom Silan stammenden Alkohols von kleiner 75 Mol-%, bevorzugt kleiner 50 Mol-%, besonders bevorzugt kleiner 30 Mol-%, insbesondere bevorzugt kleiner 20 Mol-%, der Ausgangsmenge des Alkohols im verwendeten Silan aufweisen.

Die erfindungsgemäße silanmodifizierte Kieselsäure kann 0,1 bis 50 Gew.-%, vorzugsweise 0,1 bis 25,0 Gew.-%, besonders bevorzugt 0,1 bis 10 Gew.-%, Silan enthalten.

Die erfindungsgemäße silanmodifizierte Kieselsäure kann 50 bis 99,9 Gew.-% Kieselsäure, vorzugsweise gefällte Kieselsäure, enthalten.

Das Silan kann chemisch und/oder physikalisch, vorzugsweise chemisch, mit der Oberfläche der Kieselsäure verbunden sein. Die erfindungsgemäße silanmodifizierte Kieselsäure enthält SCN-Gruppen .

Ein weiterer Gegenstand der Erfindung ist ein Verfahren zur Herstellung einer silanmodifizierten Kieselsäure, welches dadurch gekennzeichnet ist, dass man mindestens eine Kieselsäure mit einer BET-Oberfläche von 40 bis 155 m²/g, bevorzugt 50 bis 155 m²/g, besonders bevorzugt 80 bis 150 m²/g, und einer Partikelgröße d5 ≥ 4µm, bevorzugt ≥ 4,05µm und < 8µm, ganz besonders bevorzugt ≥ 4,07µm und < 6µm, und d50 ≥ 16µm, vorzugsweise ≥ 17,5 µm und < 24,0µm, besonders bevorzugt ≥ 19 µm und < 22,0µm, mit mindestens einem schwefelhaltigem Silan umsetzt, wobei man als schwefelhaltiges Silan eine Organosiliciumverbindung oder eine Mischung von Organosiliciumverbindungen der allgemeinen Formel (III)

X¹X²X³Si-A-Sub (III)

verwendet, wobei X¹, X², X³ jeweils unabhängig voneinander bedeuten können Wasserstoff (-H),
Halogen (-Cl, -Br, -I) oder Hydroxy (-OH),
ein Alkylsubstituent, vorzugsweise Methyl- ,Ethyl-, Propyl-oder Butyl-,ein Alkylsäure- (CₓH₂ₓ₊₁)-C(=O)O-, Alkenylsäuresubstituent, beispielsweise Acetoxy- CH₃-(C=O)O-,
ein substituierter Alkyl-, beziehungsweise Alkenylsäuresubstituent, zum Beispiel Oximato- R¹₂C=NO-,
eine lineare oder verzweigte, ringförmige Kohlenwasserstoffkette mit 1-8 Kohlenstoffatomen, ein Cycloalkylrest mit 5-12 Kohlenstoffatomen,ein Benzylrest oder ein halogen- oder alkylsubstituierter Phenylrest, Alkoxygruppen, vorzugsweise (C₁-C₂₄) Alkoxy, besonders bevorzugt Methoxy- (CH₃O-) oder Ethoxy- (C₂H₅O-), sowie Dodecyloxy- (C₁₂H₂₅O-), Tetradecyloxy- (C₁₄H₂₉O-), Hexadecyloxy-C₁₆H₃₃O-) und Octadecyloxy- (C₁₈H₃₇O-), mit linearen oder verzweigten Kohlenwasserstoffketten mit (C₁₋₂₄)-Atomen, Alkoxygruppen mit linearen oder verzweigten Polyetherketten mit C₁-C₂₄ Atomen,
eine Cycloalkoxygruppe mit (C₅₋₁₂)-Atomen, eine halogen- oder alkylsubstituierte Phenoxygruppe oder eine Benzyloxygruppe,
A eine lineare oder verzweigte, gesättigte oder ungesättigte aliphatische, aromatische oder gemischt aliphatische/aromatische zweibindige C₁-C₃₀ umfassende Kohlenwasserstoffkette, vorzugsweise C₁-C₃, besonders bevorzugt (-CH₂-), (-CH₂-)₂, (-CH₂-)₃, (-CH(CH₃)-CH₂-) oder (-CH₂-CH(CH₃)-), ist und Sub -SCN ist.

Die Kieselsäure kann ein d_{median} von > 18,0µm, bevorzugt > 19,0µm, besonders bevorzugt > 21,0µm, haben.

Die Kieselsäure kann Searszahlen (Verbrauch 0,1 N KOH) zwischen 1 und 50 ml pro 5 g Probe aufweisen.

Als schwefelhaltiges Silan der allgemeinen Formel (III) kann man beispielsweise folgende Verbindungen verwenden:
(MeO)₃Si-(CH₂)₃-SCN,
(EtO)₃Si-(CH₂)₃-SCN
(C₃H₇O)₃Si-(CH₂)₃-SCN,
(C₁₂H₂₅O)₂(C₁₄H₂₉₀)-Si-(CH₂)₃-SCN, (C₁₂H₂₅O)₂(C₁₆H₃₃O)-Si-(CH₂)₃-SCN,
(C₁₂H₂₅O)₂(C₁₈H₃₇O)-Si-(CH₂)₃-SCN, (C₁₄H₂₉O)₂(C₁₂H₂₅O)-Si-(CH₂)₃-SCN,
(C₁₄H₂₉O)₂(C₁₆H₃₃O)-Si-(CH₂)₃-SCN, (C₁₄H₂₉O)₂(C₁₈H₃₇O)-Si-(CH₂)₃-SCN,
(C₁₆H₃₃O)₂(C₁₂H₂₅O)-Si-(CH₂)₃-SCN, (C₁₆H₃₃O)₂(C₁₄H₂₉O)-Si-(CH₂)₃-SCN,
(C₁₆H₃₃O)₂(C₁₈H₃₇O)-Si-(CH₂)₃-SCN, (C₁₈H₃₇O)₂(C₁₂H₂₅O)-Si-(CH₂)₃-SCN,
(C₁₈H₃₇O)₂(C₁₄H₂₉O)-Si-(CH₂)₃-SCN, (C₁₈H₃₇O)₂(C₁₆H₃₃O)-Si- (CH₂)₃-SCN,
oder Mischungen der oben genannten Silane.

Als schwefelhaltiges Silan kann man Oligomere, das heisst Oligo- und Polysiloxane, oder Cooligomere der Silane der allgemeinen Formel (III) oder deren Mischungen verwenden. Die Siloxane können durch Oligomerisierung oder Cooligomerisierung der entsprechenden Silanverbindungen der allgemeinen Formeln (III) durch Wasserzugabe und dem Fachmann auf diesem Gebiet bekannte Additivzugabe erhalten werden.

Vorzugsweise kann als schwefelhaltiges Silan (EtO)₃Si-(CH₂)₃-SCN eingesetzt werden.

Als Kieselsäure können gefällte oder pyrogene Kieselsäuren, vorzugsweise gefällte Kieselsäuren, verwendet werden.

Beispielsweise kann die von der Evonik Industries AG vertriebene Fällungskieselsäure Ultrasil 5000 verwendet werden.

Der Kontakt zwischen unmodifiziertem Füllstoff und Silankomponente kann dabei mittels verschiedener technischer Lösungen bewerkstelligt werden. Vorzugsweise kann dies durch ein geeignetes Mischaggregat mit innen angebrachter Flüssigkeitsdosierung, wie sie dem Fachmann auf diesem Gebiet gut bekannt sind, erfolgen. Dies können beispielsweise, aber nicht ausschließlich, Mischer sein, wie sie von den Firmen Drais, Eirich, Forberg, Gericke, Lödige, Ruberg oder Zeppelin Reimelt angeboten werden.

Das Mischaggregat kann eine homogene, abriebarme Verteilung des verwendeten Silans auf der Kieselsäure gewährleisten. Der Energieeintrag kann vorzugsweise gering sein. Es können Freifallmischer (zum Beispiel Trommelmischer) und Mischer mit rotierenden Werkzeugen und niedriger Partikelbeanspruchung (Froudezahl < 1) für diesen Zweck verwendet werden.

Bei dem erfindungsgemäßen Verfahren können 10-250 Gew.-Teile Kieselsäure mit 0,1-50 Gew.-Teilen, vorzugsweise 0,5-15 Gew.-Teilen, Silan umgesetzt werden.

Bei dem erfindungsgemäßen Verfahren kann der Druck, der auch Arbeitsdruck genannt wird, im allgemeinen zwischen 1 und 100 bar, vorzugsweise zwischen 1 und 20 bar, besonders bevorzugt zwischen 1 und 15 bar, sein.

Die Temperatur (Arbeitstemperatur), bei dem das Verfahren durchgeführt werden kann, liegt zwischen 0 und 300°C, vorzugsweise zwischen 0 und 200°C, besonders bevorzugt zwischen 10 und 130°C.

Während der Umsetzung kann man zusätzlich ein Additiv einbringen.

Als Additiv können Stearinsäure, Milchsäure, Zitronensäure oder Polyethylenglykol verwendet werden.

Die mit dem Silan vermischte Kieselsäure kann kontinuierlich mit einem geeigneten Rühraggregat in der Hochdruckapparatur beziehungsweise dem Hochdruckgefäß umgewälzt werden. Dabei kann die Rührgeschwindigkeit der herrschenden Temperatur und dem dabei herrschenden Druck angepasst werden.

Als Rühraggregat können Hubrührer, Blattrührer, Balkenrührer, Lochbalkenrührer, Kreuzbalkenrührer, Ankerrührer, Gitterrührer, Schaufelwalze, Propellerrührer, Schneckenrührer, Turbinenrührer, Scheibenrührer, Planetenrührer, Kreiselmischer oder Impellerrührer verwendet werden.

Das Rühraggregat kann mit 1-100 Umdrehungen, vorzugsweise 1-50 Umdrehungen, Hubbewegungen oder Umwälzungen pro Minute arbeiten.

Im Anschluß an die Oberflächenmodifizierung kann die silanmodifizierte Kieselsäure einer Evakuierungs- oder Druckentspannungsstufe mit Abtrennung der zugesetzten Additive oder eines Teils der zugesetzten Additive vom Endprodukt unterworfen werden.

Die Evakuierungs- oder Druckentspannungsstufe kann in einer Zeit zwischen 1 min und 180 min, vorzugsweise zwischen 1 min und 120 min, besonders bevorzugt zwischen 1 min und 60 min, durchgeführt werden.

Die Evakuierungs- oder Druckentspannungsstufe kann bei Temperaturen zwischen 1 und 300°C, vorzugsweise zwischen 1 und 200°C, besonders bevorzugt zwischen 1 und 150°C, und ganz besonders bevorzugt bei Temperaturen zwischen 1 und 130°C, durchgeführt werden.

Die erfindungsgemäße silanmodifizierte Kieselsäure kann einem zusätzlichen Kompaktierungs- oder Bearbeitungsschritt unterzogen werden.

Die erfindungsgemäße silanmodifizierte Kieselsäure kann durch das erfindungsgemäße Verfahren erhalten werden.

Die silanmodifizierte Kieselsäure kann in Farben, Lacken, Druckfarben, Beschichtungen, Coatings, Kleb- und Schmierstoffen, Kosmetika, Zahnpasten, Bauhilfsmitteln oder als Füllstoff in vulkanisierbaren Kautschuken, Siliconen oder Kunststoffen verwendet werden.

Ein weiterer Gegenstand der Erfindung sind Kautschukmischungen, welche dadurch gekennzeichnet sind, daß sie Kautschuk, die erfindungsgemäße silanmodifizierte Kieselsäure, gegebenenfalls gefällte Kieselsäure und / oder Ruß und / oder weitere Kautschukhilfsmittel enthalten.

Für die Herstellung erfindungsgemäßer Kautschukmischungen können Naturkautschuk oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie umfassen unter anderem Polybutadien (BR),Polyisopren (IR),Styrol/Butadien-Copolymerisate mit Styrolgehalten von 1 bis 60, vorzugsweise 5 bis 50 Gew.-% (E-oder S-SBR), Isobutylen/Isopren-Copolymerisate (IIR), Butadien/Acrylnitril-Copolymere mit Acrylnitrilgehalten von 5 bis 60, vorzugsweise 10 bis 50 Gew. -% (NBR), Chloropren (CR), Ethylen/Propylen/Dien-Copolymerisate (EPDM), sowie Mischungen dieser Kautschuke.

Die erfindungsgemäßen Kautschukmischungen können weitere Kautschukhilfsprodukte, wie beispielsweise Reaktionsbeschleuniger, -verzögerer, Alterungsschutzmittel, Stabilisatoren, Verarbeitungshilfsmittel, Weichmacher, Wachse, Metalloxide sowie Aktivatoren, wie Triethanolamin, Polyethylenglykol oder Hexantriol, organisch modifizierte Silane sowie andere Kautschukhilfsprodukte, die der Kautschukindustrie bekannt sind, enthalten.

Die Kautschukmischung kann zusätzlich Alkylsilane oder/und Silikonöle enthalten.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-% bezogen auf Kautschuk.

Als Vernetzer können Schwefel, organische Schwefelspender oder Radikalbildner dienen. Die erfindungsgemäßen Kautschukmischungen können darüber hinaus Vulkanisationsbeschleuniger enthalten.

Beispiele für geeignete Vulkanisationsbeschleuniger sind Mercaptobenzthiazole, Sulfenamide, Guanidine, Thiurame, Dithiocarbamate, Thioharnstoffe und Thiocarbonate.

Die Vulkanisationsbeschleuniger und Vernetzer können in Mengen von 0,1 bis 10 Gew.-%, bevorzugt 0,1 bis 5 Gew.-%, bezogen auf Kautschuk, eingesetzt werden.

Die Abmischung der Kautschuke mit der erfindungsgemäßen, silanmodifizierten Kieselsäure, gegebenenfalls mit gefällter Kieselsäure und / oder Ruß und / oder weiteren Kautschukhilfsmitteln kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, die erfindungsgemäße silanmodifizierte Kieselsäure, gegebenenfalls die gefällte Kieselsäure und / oder Ruß und / oder weitere Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Die so erhaltene Kautschukmischung kann dann in bekannter Weise in einem Innenmischer oder auf einer Walze bei 40-110°C mit den Vernetzungschemikalien versetzt und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200°C, bevorzugt 130 bis 180°C, gegebenenfalls unter Druck von 10 bis 200 bar erfolgen.

Die erfindungsgemäßen Kautschukmischungen eignen sich zur Herstellung von Formkörpern aus Kautschuk, zum Beispiel für die Herstellung von Luftreifen für Personen- und Lastkraftwagen, Reifenlaufflächen für Personen- und Lastkraftwagen, Reifenbestandteilen für Personen- und Lastkraftwagen, wie zum Beispiel Seitenwand, Innenliner und Unterbau, Kabelmänteln, Schläuchen, Treibriemen, Förderbändern, Walzenbelägen, Fahrrad- und Motorradreifen und deren Bestanteilen, Schuhsolen, Dichtungsringen, Profilen und Dämpfungselementen.

Die erfindungsgemäßen silanmodifizierten Kieselsäuren weisen gegenüber den aus dem Stand der Technik bekannten Produkten eine ausgezeichnete Dispergierbarkeit auf und verbesserte gummitechnische Eigenschaften, zum Beispiel Abrieb, Vulkanisationsverhalten und Mooney Viskosität.

### Beispiele:

### Searszahl

Die Searszahlen werden in Anlehnung an G.W. Sears, Analyt. Chemistry 12 (1956) 1982 nach folgender Vorschrift bestimmt:
Der Füllstoff wird vor der Titration in einer Mühle vermahlen und dabei homogenisiert und zerkleinert.
2,5 g der so erhaltenen Probe werden in einem 250 ml Titriergefäß mit 60 ml Methanol versetzt und sobald der Feststoff vollständig benetzt ist weitere 40 ml Wasser zu der Suspension gegeben.
Mit einem Rührer (Ultra-Turrax) wird die Suspension für 30 sec dispergiert und anschließend mit weiteren 100 ml Wasser verdünnt. Die Suspension wird innerhalb von mindestens 20 Minuten auf 25°C temperiert.
Die Titration erfolgt folgendermaßen an einem Titroprozessor mit pH-Elektrode (z.B. DL 67, Mettler Toledo mit Elektrode DG 111 SC):
- zunächst 120 sec rühren;
- Suspension mit 0,1 N Kalilauge oder Salzsäure auf pH 6 einstellen;
- 20 ml NaCl-Lösung (250 g/l) zudosieren;
- Titration mit 0,1 N KOH von pH 6 bis pH 9;
- das Ergebnis wird umgerechnet auf 5 g Kieselsäure, also auf Verbrauch 0,1 N KOH in ml pro 5 g Kieselsäure, um von pH 6 den pH 9 zu erreichen.

Es handelt sich bei der vorliegenden Bestimmung um eine Weiterentwicklung, Präzisierung und Verbesserung des in G.W. Sears, Analyt. Chemistry 12 (1956) 1982 beschriebenen Verfahrens.

### BET-Oberfläche

Die Proben werden für 15-20 h bei 105°C getrocknet und die BET-Oberfläche gemäß DIN 66131 (volumetrisches Verfahren) bestimmt.

### Partikelgrößenverteilung

Alle Proben wurden über ein 500 µm-Sieb abgesiebt. Die Bestimmung der Partikelgrößenverteilung der Proben erfolgt durch Laserbeugungsanalyse mit 3 Minuten Ultraschallbehandlung mit einem Cilas 1064 L (Fa. Quantachrome) gemäß den allgemein bekannten Regeln und Bedienvorschriften.

Die Probenvorbereitung für die Messung (Spülen usw.) mittels Laserbeugungsgerät Cilas 1064 L (S/N 152, Fa. Quantachrome; Messbereich 0,04 - 500 µm und 400 ml Nassdispergiereinheit mit integriertem Ultraschall) erfolgt im Falle nicht modifizierter Kieselsäuren mithilfe von 0,05 % m/m Tetra-Natriumdiphosphat in VE-Wasser als Dispergierflüssigkeit, im Falle silanmodifizierter Kieselsäuren mit einem Ethanol/Wassergemisch (Volumenverhältnis 1:1) als Dispergierflüssigkeit.
Vor Beginn der Messung muss das Laserbeugungsgerät 2 Stunden warmlaufen. Danach wird das Cilas 1064 L zwei- bis viermal gespült.
Das zu messende Material wird über ein 500 µm-Sieb abgesiebt. Aus der Fraktion <500 µm werden ca. 0,5-1,0 g Probe in Abhängigkeit von der Materialbeschaffenheit für die Messung benötigt.
Folgende für die Partikelmessung relevante Parameter sind einzustellen:
Ultraschall während Dispergierung: 180 Sekunden Anzahl der Messungen: 1
Pumpengeschwindigkeit: 120 U/min (sind am Gerät fest eingestellt)
Rührergeschwindigkeit: 300 U/min (sind am Gerät fest eingestellt)
Optisches Modell: Fraunhofer (ist am Gerät fest eingestellt)

Nach Durchführung der Hintergrundmessung wird die Kieselsäure-Probe zugegeben.
Nach Rühren der Kieselsäuresuspension für 60 Sekunden und anschließender 3-minütiger Ultrabeschallung erfolgt die Messung bei gleichzeitigem Umpumpen. Für die Messung wird eine Messkonzentration von 120+/-30 angestrebt. Liegt die Messkonzentration unterhalb des anzustrebenden Konzentrationsniveaus ist die Messung abzubrechen und die Probeneinwaage zu erhöhen. Bei Überschreitung der Messkonzentration besteht die Möglichkeit einer automatischen Verdünnung durch das Cilas 1064 L.

Aus der Rohdatenkurve berechnet die Software mithilfe der Fraunhofer-Theorie die Partikelgrößenverteilung.

### Schwefelgehalt

Für die Bestimmung des durchschnittlichen Schwefelgehaltes der Proben werden in den Autoklaveneinsätzen an beiden Enden des Einsatzes und in der Mitte Proben entnommen und ihr Schwefelgehalt gemäß bekannter Verfahren durch:
- Schöniger-Aufschluß in einer Sauerstoffatmosphäre (vgl. F. Ehrenberger, S. Gorbauch, "Methoden der organischen Elementar- und Spurenanalyse", Verlag Chemie GmbH, Weinheim/Bergstraße, 1973) und
- nachgeschalteter ionenchromatographischen Analyse (Ion-Chromatograph 690 der Fa. Metrohm; PRP X-100-Säule der Fa. Hamilton; Laufmittel: 2 mmol Salicylat-Puffer, pH 7) gemäß DIN ISO 10304-2 bestimmt.

Der durchschnittliche Schwefelgehalt der Gesamtprobe ergibt sich dann als arithmetisches Mittel aus den so ermittelten 3 Werten der Einzelproben.

### Wassergehalt

Der Wassergehalt der Proben wird wie folgt bestimmt:
10 g der silanisierten Kieselsäure werden 15 Sekunden mit einer Kaffeemühle zerkleinert und anschließend der Wassergehalt gemäß den bekannten und dem Fachmann vertrauten Regeln mit einem Karl Fischer Titrator (Fa. Metrohm, 720 KFS Titrino) und den von Merck erhältlichen Karl-Fischer Titrationschemikalien Nr. 1.09241, Nr. 1.09243 und Nr. 1.06664 (Dinatriumtartrat-Dihydrat) bestimmt.

### Kohlenstoffgehalt

Der Kohlenstoffgehalt der Proben wird nach bekannten Standardverfahren mittels eines Carbon/Sulfur Determinator CS-244 der Fa. LECO bestimmt.

Die verwendete Kieselsäure ist Perkasil KS 300 der Firma Grace.

### Beispiel 1: Herstellung der Kieselsäure A

In einem Reaktor aus rostfreiem Edelstahl mit Propellerrührsystem und Doppelmantelheizung werden 1510 l Wasser sowie 46 kg Wasserglas (Dichte 1,348 kg/l, 27,0 % SiO2, 8,05 % Na2O) vorgelegt. Anschließend werden unter starkem Rühren bei 92 °C für 90 Minuten 6,655 kg/min des oben genannten Wasserglases und ca. 0,832 kg/min Schwefelsäure (Dichte 1,83 kg/l, 96 % H₂SO₄) zudosiert. Diese Schwefelsäuredosierung wird so geregelt, dass in dem Reaktionsmedium eine AZ-Zahl von 7 herrscht. Anschließend wird die Wasserglaszugabe gestoppt und die Schwefelsäure weiter zugeführt, bis ein pH von 8,5 (gemessen bei Raumtemperatur) erreicht ist. Nach ca. 30 Min. Ruhezeit wird weiter Schwefelsäure zudosiert, bis ein pH-Wert von 4,5 erreicht ist. Die erhaltene Suspension wird mit einer Membranfilterpresse filtriert und mit Wasser gewaschen und getrocknet.

### Beispiel 2: Herstellung der Kieselsäure B

In einem Reaktor aus rostfreiem Edelstahl mit Propellerrührsystem und Doppelmantelheizung werden 1550 l Wasser sowie 141,4 kg Wasserglas (Dichte 1,348 kg/l, 27,0 % SiO2, 8,05 % Na2O) vorgelegt. Anschließend werden unter starkem Rühren bei 92 °C für 100 Minuten 5,505 kg/min des oben genannten Wasserglases und ca. 0,65 kg/min Schwefelsaure (Dichte 1,83 kg/l, 96 % H₂SO₄) zudosiert. Diese Schwefelsäuredosierung wird so geregelt, dass in dem Reaktionsmedium eine AZ-Zahl von 20 herrscht. Anschließend wird die Wasserglaszugabe gestoppt und die Schwefelsäure weiter zugeführt, bis ein pH von 9,0 (gemessen bei Raumtemperatur) erreicht ist. Die Schwefelsäurezugabe wird gestoppt und die erhaltene Suspension 60 Minuten bei 90 °C nachgerührt. Im Anschluss wird die Schwefelsäurezugabe wieder aufgenommen und ein pH-Wert von 3,5 (gemessen bei Raumtemperatur) eingestellt. Die erhaltene Suspension wird mit einer Membranfilterpresse filtriert und anschließend getrocknet.

Die Tabelle 1 zeigt die analytischen Daten der Kieselsäuren und die Partikelgrößen (Tabelle 2).

**Tabelle 1**

| | Einheit | Perkasil KS 300 | Kieselsäure A | Kieselsäure B |
|---|---|---|---|---|
| BET | m²/g | 125 | 127 | 120 |
| CTAB | m²/g | 122 | 122 | 112 |
| pH | | 7,2 | 7,2 | 6,5 |
| Feuchte | % | 5,5 | 5,5 | 6,4 |

**Tabelle 2**

| | Einheit | Perkasil KS 300 | Kieselsäure A | Kieselsäure B |
|---|---|---|---|---|
| d5 | µm | 3,9 | 5,85 | 6,14 |
| d50 | µm | 12,6 | 19,98 | 21,39 |
| d95 | µm | 35,1 | 40,89 | 42,45 |
| dmedian | µm | 15,2 | 21,11 | 22,34 |

Für die Herstellung der silanmodifizierten Kieselsäuren wird ein Henschelmischer Fluidmixer FM40 des Kasseler Unternehmens Zeppelin Reimelt eingesetzt. Der Henschelmischer besteht aus einem 40 Liter Mischbehälter mit Klappdeckel, beides mit Hohlmantel für Temperiermittel (Öl) versehen. Die Mischwerkzeuge werden von unten angetrieben mittels eines Elektromotors mit Riemenantrieb. Die Mischwerkzeugdrehzahl ist variabel bis zu 2500 UpM und wird durch ein Handrad eingestellt.

Si 69 ist Bis(triethoxysilylpropyl)tetrasulfid und Si 264 ist 3-Thiocyanatopropyltriethoxysilan der Firma Evonik Industries AG.

### Beispiel 3: Herstellung der erfindungsgemäßen silanmodifizierten Kieselsäure (Kieselsäure A + Si 264)

In dem Henschelmischer wird die entsprechende Füllstoffmenge vorgelegt und der Mischer eingeschaltet. Die Mischwerkzeugdrehzahl wird auf den entsprechenden Wert eingestellt. Das Silan wird mittels Ultraschalldüse in den Mischer eingesprüht.
Anschließend wird das Mischerauslaßventil geöffnet und das Produkt aus dem Mischer ausgefahren.

Die Mischbedingungen sind in Tabelle 3 aufgeführt. Als Kieselsäure wird die Kieselsäure A (Beispiel 1) und als Silan Si 264 eingesetzt.

### Beispiel 4: Herstellung der silanmodifizierten Kieselsäure (Kieselsäure A + Si 69)

Die Herstellung erfolgt analog Beispiel 3. Die Mischbedingungen sind in Tabelle 3 aufgeführt. Als Kieselsäure wird die Kieselsäure A (Beispiel 1) und als Silan Si 69 eingesetzt.

### Beispiel 5: Herstellung der erfindungsgemäßen silanmodifizierten Kieselsäure (Kieselsäure B + Si 264)

Die Herstellung erfolgt analog Beispiel 3. Die Mischbedingungen sind in Tabelle 3 aufgeführt. Als Kieselsäure wird die Kieselsäure B (Beispiel 2) und als Silan Si 264 eingesetzt.

### Beispiel 6: Herstellung der silanmodifizierten Kieselsäure (Kieselsäure B + Si 69)

Die Herstellung erfolgt analog Beispiel 3. Die Mischbedingungen sind in Tabelle 3 aufgeführt. Als Kieselsäure wird die Kieselsäure B (Beispiel 2) und als Silan Si 69 eingesetzt.

### Beispiel 7: Herstellung von silanmodifizierter Kieselsäure (Kieselsäure Perkasil KS 300P + Si 264)

Die Herstellung erfolgt analog Beispiel 3. Die Mischbedingungen sind in Tabelle 3 aufgeführt. Als Kieselsäure wird Perkasil KS 300P und als Silan Si 264 eingesetzt.

### Beispiel 8: Herstellung von silanmodifizierter Kieselsäure (Kieselsäure Perkasil KS 300P + Si 69)

Die Herstellung erfolgt analog Beispiel 3. Die Mischbedingungen sind in Tabelle 3 aufgeführt. Als Kieselsäure wird Perkasil KS 300P und als Silan Si 69 eingesetzt.

**Tabelle 3**

| | Beispiel 3 | Beispiel 4 | Beispiel 5 | Beispiel 6 | Beispiel 7 | Beispiel 8 |
|---|---|---|---|---|---|---|
| Durchflusstemperatur (°C) | 20 | 20 | 20 | 20 | 20 | 20 |
| Füllstoffmenge (kg) | 3 | 3 | 3 | 3 | 3 | 3 |
| Silanmenge (kg) | 0,330 | 0,270 | 0,330 | 0,270 | 0,330 | 0,270 |
| Mischtemperatur (°C) | (55) | (55) | (55) | (55) | (55) | (55) |
| Rührergeschwindigkeit (UpM) | 1500 | 1500 | 1500 | 1500 | 1500 | 1500 |
| Düsendurchmesser (mm) | (0.5) | (0.5) | (0.5) | (0.5) | (0.5) | (0.5) |
| Verdüsungsdruck (bar) | 40 | 40 | 40 | 40 | 40 | 40 |
| Mischzeit (min) | 7 | 7 | 7 | 7 | 7 | 7 |

Die Tabelle 4 zeigt die Partikelgrößen der silanmodifizierten Kieselsäuren.

**Tabelle 4**

| | Einheit | Beispiel 3 | Beispiel 4 | Beispiel 5 | Beispiel 6 | Beispiel 7 | Beispiel 8 |
|---|---|---|---|---|---|---|---|
| d5 | µm | 4,47 | 4,21 | 4,13 | 4,31 | 3,84 | 3,87 |
| d50 | µm | 19,70 | 19,31 | 20,65 | 20,16 | 15,74 | 15,57 |
| d95 | µm | 43,33 | 43,55 | 46,20 | 47,12 | 46,17 | 46,46 |
| Dmedian | µm | 21,02 | 20,76 | 21,84 | 21,88 | 19,47 | 19,51 |
| Schwefelgehalt | Gew.-% | 1,21 | 1,84 | 1,21 | 1,84 | 1,21 | 1,84 |

### Beispiel 9: Kautschukmischungen

Die für die Kautschukmischungen verwendete Rezeptur ist in der folgenden Tabelle 5 angegeben. Dabei bedeutet die Einheit phr Gewichtsanteile, bezogen auf 100 Teile des eingesetzten Rohkautschuks. Das allgemeine Verfahren zur Herstellung von Kautschukmischungen und deren Vulkanisaten ist in dem folgenden Buch beschrieben: "Rubber Technology Handbook", W. Hofmann, Hanser Verlag 1994.

**Tabelle 5**

| | Menge [phr] | Menge [phr] | Menge [phr] | Menge [phr] | Menge [phr] | Menge [phr] | Menge [phr] | Menge [phr] |
|---|---|---|---|---|---|---|---|---|
| Mischung | 1 | 2 | 3 | 4 | 5 | 6 | 7 | 8 |
| 1.Stufe | | | | | | | | |
| Buna® EP G 5455 | 150 | 150 | 150 | 150 | 150 | 150 | 150 | 150 |
| Perkasil KS 300 | 60 | 60 | 0 | 0 | 0 | 0 | 0 | 0 |
| Erf.Beispiel 3 | 0 | 0 | 61 | 0 | 0 | 0 | 0 | 0 |
| Beispiel 4 | 0 | 0 | 0 | 62 | 0 | 0 | 0 | 0 |
| Erf.Beispiel 5 | 0 | 0 | 0 | 0 | 61 | 0 | 0 | 0 |
| Beispiel 6 | 0 | 0 | 0 | 0 | 0 | 62 | 0 | 0 |
| Erf.Beispiel 7 | 0 | 0 | 0 | 0 | 0 | 0 | 62 | 0 |
| Vergleichsbeispiel 8 | 0 | 0 | 0 | 0 | 0 | 0 | 0 | 62 |
| Si 264 | 1 | 0 | 0 | 0 | 0 | 0 | 0 | 0 |
| Si 69® | 0 | 2 | 0 | 0 | 0 | 0 | 0 | 0 |
| Stearinsäure | 2 | 2 | 2 | 2 | 2 | 2 | 2 | 2 |
| ZnO | 4 | 4 | 4 | 4 | 4 | 4 | 4 | 4 |
| Vivatec 500 | 30 | 30 | 30 | 30 | 30 | 30 | 30 | 30 |
| Vulkanox 4020/LG | 1,5 | 1,5 | 1,5 | 1,5 | 1,5 | 1,5 | 1,5 | 1,5 |
| 2.Stufe | | | | | | | | |
| Batch Stufe 1 | | | | | | | | |
| Vulkacit | 1 | 1 | 1 | 1 | 1 | 1 | 1 | 1 |
| Mercapto C | | | | | | | | |
| Robac TBED | 0,8 | 0,8 | 0,8 | 0,8 | 0,8 | 0,8 | 0,8 | 0,8 |
| Rhenocure TP/S | 2 | 2 | 2 | 2 | 2 | 2 | 2 | 2 |
| Rhenogran DPG-80 | 2,5 | 2,5 | 2,5 | 2,5 | 2,5 | 2,5 | 2,5 | 2,5 |
| Schwefel | 1,5 | 1,5 | 1,5 | 1,5 | 1,5 | 1,5 | 1,5 | 1,5 |

Bei dem Polymer Buna® EP G 5455 handelt es sich um ein Ethylenpropylenterpolymer mit einer mittleren Ungesättigtkeit (ENB Gehalt = 4,3) enthaltend 50 phr paraffinisches Öl der Lanxess. Das Polymer weist eine Mooney-Viskosität (ML 1+4/125°C/ML(1+8)) von 46 auf.

Als mineralisches Öl wird Vivatec 500 der H&R Gruppe verwendet. Bei Vulkanox 4020 handelt es sich um 6PPD der Firma Lanxess. Vulkacit Mercapto C ist ein Handelsprodukt der Firma Lanxess.

Robac TBED ist ein Handelsprodukt der Firma Robinson Brothers. Rhenocure TP/S und Rhenogran DPG-80 sind Handelsprodukte der Rheinchemie.

Die Kautschukmischungen werden in einem Innenmischer entsprechend der Mischvorschrift in Tabelle 6 hergestellt.

**Tabelle 6**

| | | Stufe 1 |
|---|---|---|
| Einstellungen | | |
| Mischaggregat | | Werner & Pfleiderer N-Typ |
| Drehzahl | | 60 min⁻¹ |
| Stempeldruck | | 5,5 bar |
| Leervolumen | | 1,60 L |
| Füllgrad | | 0,70 |
| Durchflußtemp. | | 60 °C |

| Mischvorgang | | |
|---|---|---|
| 0 bis | 1 min | Buna EP G 5455 |
| | | 1/3 Kieselsäure bzw. silanisierte Kieselsäure, ggf. Silan, ZnO, Stearinsäure, Vulkanox |
| 1 bis | 2 min | Säubern und mischen |
| 2 bis | 3 min | 1/3 Kieselsäure bzw. silanisierte Kieselsäure, 1/2 Vivatec |
| | | |
| 3 bis | 4 min | Säubern und mischen |
| | | |
| 4 bis | 5 min | 1/3 Kieselsäure bzw. silanisierte Kieselsäure, 1/2 Vivatec |
| | | |
| 5 bis | 6 min | Säubern und mischen |
| | | |
| 6 bis | 7 min | Mischen |
| | | |
| 7 min | | Ausfahren |
| Batch-Temp. | | 90-130°C |
| Lagerung | | 4 h bei Raumtemperatur |

| | | Stufe 2 |
|---|---|---|
| Einstellungen | | |
| Mischaggregat | | Wie in Stufe 1 bis auf: |
| Durchflußtemp. | | 40 °C |
| Drehzahl | | 50 min⁻¹ |
| Füllgrad | | 0,68 |

| Mischvorgang | | |
|---|---|---|
| 0 bis | 2 min | Batch Stufe 1, Beschleuniger, Schwefel |
| | 2 min | Ausfahren |
| | | |
| Batch-Temp. | | 80-100°C |
| Lagerung | | 4 h bei Raumtemperatur |

In Tabelle 7 sind die Methoden für die Gummitestung zusammengestellt.

**Tabelle 7**

| Physikalische Testung | Norm/ Bedingungen |
|---|---|
| ML 1+4, 100°C, 3. Stufe | DIN 53523/3, ISO 667 |
| Vulkameterprüfung, 165°C | DIN 53529/3, ISO 6502 |
| Dmax - Dmin [dNm] | |
| t10% und t90% [min] | |
| Zugversuch am Ring, 23°C | DIN 53504, ISO 37 |
| Zugfestigkeit [MPa] | |
| Spannungswerte [MPa] | |
| Bruchdehnung [%] | |
| Shore-A-Härte, 23°C [SH] | DIN 53 505 |
| Viskoelastische Eigenschaften, 0 und 60°C, 16 Hz, 50 N Vorkraft und 25 N Amplitudenkraft | DIN 53 513, ISO 2856 |
| Dynamischer Modul E* [MPa] | |
| Verlustfaktor tan δ[] | |
| Ball Rebound, 23°C, 60°C [%] | ASTM D 5308 |
| DIN-Abrieb, 10 N Kraft [mm³] | DIN 53 516 |

Die Ergebnisse der gummitechnischen Prüfungen sind in der Tabelle 8 zusammengestellt.

**Tabelle 8**

| Mischung | | **1** | **2** | **3** | **4** | **5** | **6** | **7** | **8** |
|---|---|---|---|---|---|---|---|---|---|
| *ML (1*+*4) 100 °C 1.Stufe* | MU | 76 | 77 | 64 | 63 | 63 | 64 | 67 | 71 |
| *ML (1*+*4) 100 °C 2. Stufe* | MU | 68 | 66 | 61 | 60 | 59 | 60 | 64 | 63 |
| | | | | | | | | | |
| Energieeintrag 1.Stufe | [kWh] | 0,51 | 0,50 | 0,46 | 0,44 | 0,45 | 0,41 | 0,43 | 0,41 |
| spezifische Energie / 1.Stufe | [kWh/Kg] | 0,45 | 0,44 | 0,41 | 0,38 | 0,39 | 0,35 | 0,38 | 0,36 |
| | | | | | | | | | |

| *MDR: 165 °C; 0.5*° | | | | | | | | | |
|---|---|---|---|---|---|---|---|---|---|
| t20% | Min | 0,6 | 1,0 | 0,6 | 0,7 | 0,7 | 0,7 | 0,5 | 0,5 |
| t90% | Min | 6,3 | 7,6 | 4,8 | 6,1 | 5,2 | 5,5 | 4,8 | 6,1 |
| t80% - t20% | Min | 3,5 | 4,2 | 2,6 | 3,3 | 2,7 | 2,9 | 2,6 | 3,3 |
| | | | | | | | | | |
| Modulus 100% | MPa | 1,1 | 1,3 | 0,9 | 1,1 | 1,0 | 1,2 | 0,9 | 1,1 |
| Modulus 300% | MPa | 3,8 | 4,6 | 4,5 | 5,9 | 4,8 | 6,3 | 4,5 | 5,9 |
| Modulus 300%/100% | -- | 3,5 | 3,5 | 5,0 | 5,4 | 4,8 | 5,3 | 5,0 | 5,4 |
| Bruchdehnung | % | 491 | 469 | 584 | 413 | 505 | 355 | 584 | 413 |
| | | | | | | | | | |
| *Shore-A-Härte* | SH | 46 | 48 | 45 | 48 | 46 | 49 | 45 | 48 |
| | | | | | | | | | |
| *DIN-Abrieb, 10 N* | mm³ | 192 | 193 | 146 | 128 | 133 | 134 | 146 | 128 |
| | | | | | | | | | |
| *Ball-Rebound, RT* | % | 72,9 | 72,9 | 67,8 | 68,6 | 67,5 | 69,7 | 67,8 | 68,6 |
| *Ball-Rebound, 70 °C* | % | 80,5 | 79,4 | 75,1 | 79,6 | 74,2 | 79,8 | 75,1 | 79,6 |
| | | | | | | | | | |

| *MTS, 16Hz, 50N+*/*-25N* | | | | | | | | | |
|---|---|---|---|---|---|---|---|---|---|
| E*, 0°C | MPa | 5,4 | 5,6 | 5,6 | 5,5 | 5,6 | 5,6 | 5,6 | 5,5 |
| E*, 60°C | MPa | 5,5 | 5,9 | 5,4 | 5,7 | 5,4 | 5,8 | 5,4 | 5,7 |
| *Dispersion Topographie* Summe der Peaks | - | 344 | 357 | 128 | 134 | 188 | 205 | 336 | 386 |
| Peakfläche (Topo) | % | 25,6 | 27,2 | 10,6 | 11,3 | 13,2 | 15,5 | 24,0 | 26,2 |

Wie aus Tabelle 8 ersichtlich ist, zeigen die Mischungen 3-6 eine signifikante Verbesserung der benötigten Energie während des Mischprozesses. Die Mooney Viskositäten der Mischungen mit den erfindungsgemäßen silanisierten Kieselsäuren sind deutlich verbessert.

Die Mischungen mit den erfindungsgemäßen silanisierten Kieselsäuren zeigen eine besseres (schnelleres) Vulkanisationsverhalten bei gleichzeitiger Beibehaltung der Scorchsicherheit und einen verbesserten Abriebwiderstand.

Der Modul, die Bruchdehnung und die dynamischen Daten der Mischungen mit den erfindungsgemäßen silanisierten Kieselsäuren sind auf dem gleichen Niveau wie die Vergleichsmischungen.

## Patentansprüche

1. Silanmodifizierte Kieselsäure, **dadurch gekennzeichnet, dass** die BET-Oberfläche 40 bis 155 m²/g, der Schwefelgehalt zwischen 0,05 und 25 Gew.-% und die Partikelgröße d5 ≥ 4µm und d50 ≥ 16µm ist und die silanmodifizierte Kieselsäure SCN-Gruppen enthält.

2. Silanmodifizierte Kieselsäure gemäß Anspruch 1, **dadurch gekennzeichnet, dass** d_{median} > 20µm ist.

3. Silanmodifizierte Kieselsäure gemäß einem der Ansprüchs 1 oder 2, **dadurch gekennzeichnet, dass** die BET-Oberfläche 50 bis 135 m²/g ist.

4. Silanmodifizierte Kieselsäure gemäß einem der Ansprüche 1 bis 3, **dadurch gekennzeichnet, dass** der Schwefelgehalt zwischen 0,05 und 10 Gew.-% ist.

5. Verfahren zur Herstellung von silanmodifizierter Kieselsäure gemäß Anspruch 1, **dadurch gekennzeichnet, dass** man mindestens eine Kieselsäure mit einer BET-Oberfläche von 40 bis 155 m²/g und einer Partikelgröße d5 ≥ 4µm und d50 ≥ 16µm, mit mindestens einem schwefelhaltigem Silan umsetzt, wobei man als schwefelhaltiges Silan eine Organosiliciumverbindung oder eine Mischung von Organosiliciumverbindungen der allgemeinen Formel (III)
X¹X²X³Si-A-Sub (III)
verwendet, wobei X¹, X², X³ jeweils unabhängig voneinander bedeuten können
Wasserstoff (-H),
Halogen oder Hydroxy (-OH),
ein Alkyl-,
ein Alkylsäure- (CₓH₂ₓ₊₁) -C(=O)O-,
ein Alkenylsäuresubstituent oder
ein substituierter Alkyl-, beziehungsweise Alkenylsäuresubstituent,
eine lineare oder verzweigte, ringförmige Kohlenwasserstoffkette mit 1-8 Kohlenstoffatomen,
ein Cycloalkylrest mit 5-12 Kohlenstoffatomen,
ein Benzylrest oder
ein halogen- oder alkylsubstituierter Phenylrest, Alkoxygruppen mit linearen oder verzweigten Kohlenstoffwasserstoffketten mit (C₁₋₂₄) Atomen, Alkoxygruppen mit linearen oder verzweigten Polyetherketten mit (C₁₋₂₄) Atomen,
eine Cycloalkoxygruppe mit (C₅₋₁₂)-Atomen,
eine halogen- oder alkylsubstituierte Phenoxygruppe oder eine Benzyloxygruppe,
A eine verzweigte oder unverzweigte, gesättigte oder ungesättigte alliphatische, aromatische oder gemischt alliphatische/aromatische zweibindige C₁-C₃ umfassende Kohlenwasserstoffkette ist und Sub -SCN ist.

6. Verfahren zur Herstellung von silanmodifizierter Kieselsäure nach Anspruch 5, **dadurch gekennzeichnet, dass** man Organosiliciumverbindungen der Formel (EtO)₃Si-(CH₂)₃-SCN einsetzt.

7. Verwendung der silanmodifizierter Kieselsäure nach Anspruch 1 in Farben, Lacken, Druckfarben, Beschichtungen, Coatings, Kleb- und Schmierstoffen, Kosmetika, Zahnpasten, Bauhilfsmitteln oder als Füllstoffe in vulkanisierbaren Kautschuken, Siliconen oder Kunststoffen.

8. Kautschukmischungen, **dadurch gekennzeichnet, dass** sie Kautschuk, die erfindungsgemäße silanmodifizierte Kieselsäure nach Anspruch 1, gegebenenfalls gefällte Kieselsäure und/oder Ruß und/oder weitere Kautschukhilfsmittel enthalten.

9. Verwendung der Kautschukmischungen nach Anspruch 8 zur Herstellung von Formkörpern.

10. Verwendung der Kautschukmischungen nach Anspruch 8 zur Herstellung von Luftreifen für Personen- und Lastkraftwagen, Reifenlaufflächen für Personen- und Lastkraftwagen, Reifenbestandteilen für Personen- und Lastkraftwagen, Kabelmänteln, Schläuchen, Treibriemen, Förderbändern, Walzenbelägen, Fahrrad- und Motorradreifen und deren Bestandteilen, Schuhsolen, Dichtungsringen, Profilen und Dämpfungselementen.

## Claims

1. Silane-modified silica, **characterized in that** the BET surface area is 40 to 155 m²/g, the sulphur content is between 0.05% and 25% by weight and the particle size d5 is ≥ 4µm and d50 is ≥ 16 µm and the silane-modified silica contains SCN groups.

2. Silane-modified silica according to Claim 1, **characterized in that** d_{median} is > 20 µm.

3. Silane-modified silica according to either of Claims 1 and 2, **characterized in that** the BET surface area is 50 to 135 m²/g.

4. Silane-modified silica according to any of Claims 1 to 3, **characterized in that** the sulphur content is between 0.05% and 10% by weight.

5. Process for preparing silane-modified silica according to Claim 1, **characterized in that** at least one silica having a BET surface area of 40 to 155 m²/g and a particle size d5 of ≥ 4 µm and d50 of ≥ 16 µm is reacted with at least one sulphur-containing silane, wherein the sulphur-containing silane used is an organosilicon compound or a mixture of organosilicon compounds of the general formula (III)
X¹X²X³Si-A-Sub (III)
where X¹, X², X³ may each independently be hydrogen (-H),
halogen or hydroxyl (-OH),
an alkyl substituent,
an alkyl acid substituent (CₓH₂ₓ₊₁)-C(=O)O-,
an alkenyl acid substituent or
a substituted alkyl or alkenyl acid substituent,
a linear or branched, cyclic hydrocarbon chain having 1-8 carbon atoms,
a cycloalkyl radical having 5-12 carbon atoms,
a benzyl radical or
a halogen- or alkyl-substituted phenyl radical, alkoxy groups having linear or branched hydrocarbon chains having (C₁₋₂₄) atoms, alkoxy groups having linear or branched polyether chains having (C₁₋₂₄) atoms,
a cycloalkoxy group having (C₅₋₁₂) atoms,
a halogen- or alkyl-substituted phenoxy group or a benzyloxy group,
A is a branched or unbranched, saturated or unsaturated, aliphatic, aromatic or mixed aliphatic/aromatic divalent C₁-C₃₀-comprising hydrocarbon chain and Sub is -SCN.

6. Process for preparing silane-modified silica according to Claim 5, **characterized in that** organosilicon compounds of the formula (EtO)₃Si-(CH₂)₃-SCN are used.

7. Use of the silane-modified silica according to Claim 1 in paints, lacquers, printing inks, coatings, adhesives and lubricants, cosmetics, toothpastes, building auxiliaries, or as fillers in vulcanizable rubbers, silicones or plastics.

8. Rubber mixtures, **characterized in that** they comprise rubber, the inventive silane-modified silica according to Claim 1, optionally precipitated silica and/or carbon black and/or further rubber auxiliaries.

9. Use of the rubber mixtures according to Claim 8 for production of shaped bodies.

10. Use of the rubber mixtures according to Claim 8 for production of pneumatic tyres for passenger and heavy goods vehicles, tyre treads for passenger and heavy goods vehicles, tyre constituents for passenger and heavy goods vehicles, cable sheaths, hoses, drive belts, conveyor belts, roller coverings, pedal cycle and motorcycle tyres and constituents thereof, shoe soles, gasket rings, profiles and damping elements.

## Revendications

1. Silice modifiée par silane, **caractérisée en ce que** la surface BET est de 40 à 155 m²/g, la teneur en soufre est située entre 0,05 et 25% en poids et la grosseur des particules est d5 ≥ 4 µm et d50 ≥ 16 µm et la silice modifiée par silane contient des groupes SCN.

2. Silice modifiée par silane selon la revendication 1, **caractérisée en ce que** d_{médian} > est 20 µm.

3. Silice modifiée par silane selon l'une quelconque des revendications 1 ou 2, **caractérisée en ce que** la surface BET est de 50 à 135 m²/g.

4. Silice modifiée par silane selon l'une quelconque des revendications 1 à 3, **caractérisée en ce que** la teneur en soufre est située entre 0,05 et 10% en poids.

5. Procédé pour la préparation de silice modifiée par silane selon la revendication 1, **caractérisé en ce qu'**on transforme au moins une silice présentant une surface BET de 40 à 155 m²/g et une grosseur de particule d5 ≥ 4 µm et d50 ≥ 16 µm, avec au moins un silane contenant du soufre, un composé organosilicié ou un mélange de composés organosiliciés de formule générale (III)
X¹X²X³Si-A-Sub (III)
étant utilisé comme silane contenant du soufre, X¹, X², X³ pouvant signifier, à chaque fois indépendamment les uns des autres,
hydrogène (-H),
halogène ou hydroxy (-OH),
un substituant alkyle,
un substituant alkylacide (CₓH₂ₓ₊₁) -C(=O)O-,
un substituant alcénylacide ou
un substituant alkylacide ou alcénylacide substitué, une chaîne hydrocarbonée linéaire ou ramifiée ou cyclique comprenant 1-8 atomes de carbone,
un radical cycloalkyle comprenant 5-12 atomes de carbone, un radical benzyle ou
un radical phényle substitué par halogène ou alkyle, des groupes alcoxy présentant des chaînes hydrocarbonées linéaires ou ramifiées comprenant (C₁₋₂₄) atomes,
des groupes alcoxy présentant des chaînes polyéther linéaires ou ramifiées comprenant (C₁₋₂₄) atomes,
un groupe cycloalcoxy comprenant (C₅-₁₂) atomes,
un groupe phénoxy substitué par halogène ou alkyle,
ou un groupe benzyloxy,
A représente une chaîne hydrocarbonée ramifiée ou non ramifiée, saturée ou insaturée, aliphatique, aromatique ou aliphatique/aromatique mixte, divalente en C₁-C₃₀ et Sub représente -SCN.

6. Procédé pour la préparation de silice modifiée par silane selon la revendication 5, **caractérisé en ce qu'**on utilise des composés organosiliciés de formule (EtO)₃Si-(CH₂)₃-SCN.

7. Utilisation de la silice modifiée par silane selon la revendication 1, dans des peintures, des laques, des encres d'impression, des revêtements, des recouvrements, des adhésifs et des lubrifiants, des cosmétiques, des pâtes dentaires, des adjuvants de construction ou comme charges dans des caoutchoucs vulcanisables, des silicones ou des matériaux synthétiques.

8. Mélanges de caoutchouc, **caractérisés en ce qu'**ils contiennent du caoutchouc, la silice modifiée par silane selon la revendication 1, le cas échéant de la silice précipitée et/ou de la suie et/ou d'autres adjuvants du caoutchouc.

9. Utilisation des mélanges de caoutchouc selon la revendication 8 pour la fabrication de corps façonnés.

10. Utilisation des mélanges de caoutchouc selon la revendication 8 pour la fabrication de pneumatiques pour voitures particulières ou camions, de bandes de roulement de pneus pour voitures particulières ou camions, de constituants de pneus pour voitures particulières et camions, de gaines de câble, de tuyaux, de courroies d'entraînement, de bandes transporteuses, de revêtements de cylindres, de pneus pour vélos et motocyclettes et leurs constituants, de semelles, de joints d'étanchéité, de profilés et d'éléments d'amortissement.
